(19) Europäisches Patentamt / European Patent Office / Office européen des brevets

(11) **EP 3 027 432 B1**

(12) **EUROPEAN PATENT SPECIFICATION**

(45) Date of publication and mention of the grant of the patent:
**26.02.2020 Bulletin 2020/09**

(21) Application number: **14832237.3**

(22) Date of filing: **31.07.2014**

(51) Int Cl.:
***B60C 11/00*** (2006.01) ***C08L 21/00*** (2006.01)
***C08K 3/08*** (2006.01) ***B60C 1/00*** (2006.01)
***C08K 3/22*** (2006.01) ***C08K 7/16*** (2006.01)
***C08K 7/22*** (2006.01) ***B60C 11/14*** (2006.01)
***C08L 7/00*** (2006.01) ***C08L 9/00*** (2006.01)

(86) International application number:
**PCT/JP2014/070803**

(87) International publication number:
**WO 2015/016390 (05.02.2015 Gazette 2015/05)**

# (54) A PNEUMATIC TIRE HAVING A TREAD COMPRISING MILLIPARTICLES

LUFTREIFEN MIT EINER LAUFFLÄCHE MIT MILLIPARTIKELN

PNEUMATIQUE POSSÉDANT UNE BANDE DE ROULEMENT COMPRENANT DES MILLI-PARTICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2013 PCT/JP2013/071297**

(43) Date of publication of application:
**08.06.2016 Bulletin 2016/23**

(73) Proprietor: **Compagnie Générale des Etablissements Michelin**
**63000 Clermont-Ferrand (FR)**

(72) Inventors:
- **XUE, Boyong**
**Shanghai Municipality**
**200237 (CN)**
- **PAGANO, Salvatore**
**63040 Clermont-Ferrand Cedex 9 (FR)**

(74) Representative: **Regimbeau**
**20, rue de Chazelles**
**75847 Paris Cedex 17 (FR)**

(56) References cited:

| | |
|---|---|
| **EP-A1- 0 896 981** | **EP-A1- 0 905 186** |
| **EP-A1- 2 565 057** | **WO-A1-2011/073188** |
| **WO-A1-2011/086061** | **WO-A1-2011/113731** |
| **JP-A- H05 148 390** | **JP-A- 2011 012 110** |
| **JP-A- 2013 517 356** | **JP-U- H03 130 703** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 027 432 B1

## Description

### 1. FIELD OF THE INVENTION

The invention relates to a pneumatic tire having a tread suitable for "winter tires" capable of rolling over ground surfaces covered with snow and/or ice without being provided with studs (also known as studless tires). It relates more particularly to a pneumatic tire having a tread having a composite structure with a least a surface portion and an internal portion which are radially adjacent and have different formulations.

### 2. BACKGROUND

In order to ensure performance of tire tread on snow and/or ice, it is well known that creation of microroughness on tread surface is a convenient way. This can be achieved by introduction of many types of microparticles inside rubber composition(s).

For instance, patent applications JP 05/287130, WO 2009/083125, WO 2010/009850, WO 2011/073186, WO 2011/086061, WO2012/052331 and WO 2012/085063 filed by the applicants described specific rubber compositions which are capable of generating an effective surface microroughness by virtue of microparticles having a median size by weight of 1 mm or less and which makes it possible to improve grip on ice of the treads and tires comprising them under melting ice conditions encountered within a temperature range typically of between -5°C and 0°C.

However, when the said microparticles create microcavities after gradual expulsion from the rubber matrix, grip on snow of tread and tire is not improved especially under compacted snow which can be commonly found on roads in winter.

### 3. BRIF DESCRIPTION OF THE INVENTION

On continuing their research, the applicants have discovered a novel and specific surfacic portion of a tread of a pneumatic tire, the surfacic portion comprising a rubber composition which is capable of generating a well-known "claw effect" on snow surface (of course, on ice surface too) by virtue of hydro soluble milliparticles before releasing millicavities, and then, subsequently, after gradual expulsion from the rubber composition, the hydro soluble milliparticles release the millicavities substantially scraping, picking up and retaining snow from the ground and then efficiently leading higher friction coefficient than normal friction coefficient between snow and rubber and which makes possible an improvement of grip on snow of tires comprising this tread.

The millicavities act as storage volume and as channel for draining water or water film layer on snow or ice surfaces, the water or the water film layer being generated by pressure of the tires during passage of a vehicle; under these conditions, the contact between the surface of the tread and snow or ice is no longer lubricated and the coefficient of friction is thus improved.

Thus, a first subject matter of the invention is a pneumatic tire having a tread comprising at least two radially superposed portions comprising;

- a surfacic portion intended to come into contact with ground during rolling at least when the tread is new (or before use) and in the cured state, having a thickness of more than 1 mm and being made of a rubber composition,
- an internal portion adjacent to the surfacic portion, having a thickness of more than 1 mm and being made of a rubber composition which is different from the rubber composition of the surfacic portion,

wherein the rubber composition of the surfacic portion comprises at least;

- a diene elastomer;
- more than 30 phr of a liquid plasticizer;
- 50 to 150 phr of a reinforcing filler; and
- hydro soluble milliparticles having a median size by weight of more than 1 mm, and a volume fraction of the hydro soluble milliparticles more than 20% in volume of the rubber composition of the surfacic portion.

Moreover, aspects of the invention can be as follows.

[1] A pneumatic tire having a tread comprising at least two radially superposed portions comprising:

- a surfacic portion intended to come into contact with ground during rolling at least when the tread is new and in the cured state, having a thickness of more than 1 mm and being made of a rubber composition,

- an internal portion adjacent to the surfacic portion, having a thickness of more than 1 mm and being made of a rubber composition which is different from the rubber composition of the surfacic portion,

wherein the rubber composition of the surfacic portion comprises at least:

- a diene elastomer;
- more than 30 phr of a liquid plasticizer;
- 50 to 150 phr of a reinforcing filler; and
- hydro soluble milliparticles having a median size by weight of more than 1 mm, in a volume fraction of the hydro soluble milliparticles of more than 20% in volume of the rubber composition of the surfacic portion.

[2] The tire according to [1], wherein the volume fraction of the hydro soluble milliparticles is more than 30% in volume of the rubber composition of the surfacic portion.
[3] The tire according to [1] or [2], wherein the hydro soluble milliparticles have the median size by weight of between 1 mm and 5 mm.
[4] The tire according to any one of [1] to [3], wherein the hydro soluble milliparticles comprise a metal salt, a hydro soluble polymer or a mixture thereof.
[5] The tire according to any one of [1] to [3], wherein the hydro soluble milliparticles comprise a metal salt in which said salt is chosen from the group consisting of chloride, carbonate, sulfate and the mixture thereof.
[6] The tire according to any one of [1] to [3], wherein the hydro soluble milliparticles comprise a metal salt in which said metal is an alkali metal or an alkaline earth metal.
[7] The tire according to [6], wherein the alkali metal or the alkaline earth is chosen from the group consisting of Na, K, Ca, Mg and the mixture thereof.
[8] The tire according to any one of [1] to [3], wherein the hydro soluble milliparticles comprise a hydro soluble polymer which is chosen from the group consisting of polyvinyl alcohol polymer, modified cellulose polymer and mixtures thereof.
[9] The tire according to any one of [1] to [8], wherein the diene elastomer is chosen from the group consisting of natural rubber, synthetic polyisoprenes, polybutadienes, butadiene copolymers, isoprene copolymers and the mixtures thereof.
[10] The tire according to [9], wherein the surfacic portion comprises at least 50 phr of natural rubber or of synthetic polyisoprene as the diene elastomer.
[11] The tire according to [9] or [10], wherein the surfacic portion comprises at least 50 phr of a polybutadiene having a content of cis-1,4 bonds of greater than 90%.
[12] The tire according to any one of [1] to [11], wherein the reinforcing filler comprises an inorganic filler or a carbon black or a mixture thereof.
[13] The tire according to any one of [1] to [12], wherein the content of total reinforcing filler is between 60 and 120 phr.
[14] The tire according to any one of [1] to [13], wherein the liquid plasticizer is chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.
[15] The tire according to [14], wherein the content of liquid plasticizer is greater than 40 phr.

## **4.** BRIEF DESCRIPTION OF THE DRAWINGS

Other characteristics and advantages of the invention arise from the description made hereafter in reference to the annexed drawings which show, as non-restrictive examples, some embodiments of the object of the invention.
In these drawings:
[FIG. 1] FIG. 1 (a) shows a schematic view of a tire cross sectional view according to this invention, and FIG. 1 (b) shows a partial enlarged sectional view of a part indicated by B in FIG. 1 (a);
[FIG. 2] FIG. 2 (a) shows a schematic view of a tire cross sectional view of another variant of this invention, and FIG. 2 (b) shows a partial enlarged sectional view of a part indicated by B in FIG. 2 (a).

## **5.** DETAILED DESCRIPTION OF THE INVENTION

The tire (1) of the invention as presented in FIG. 1 and FIG. 2 has a tread (2) having a specific composite

structure with a surfacic portion (3) and an internal portion (4), radially adjacent, having a different formulation from the formulation of the surfacic portion (3).

The rubber composition composing the surfacic portion (3) of the tread (2) of the tire (1) of the invention comprises at least a diene elastomer, a liquid plasticizer, a reinforcing filler and hydro soluble milliparticles (5), which components are described in detail below.

In the present description, unless expressly indicated otherwise, all the percentages (%) shown are % by weight. Moreover, any interval of values denoted by the expression "between a and b" represents the range of values extending from greater than a to less than b (that is to say, limits a and b excluded) whereas any interval of values denoted by the expression "from a to b" means the range of values extending from a up to b (that is to say, including the strict limits a and b).

5-1. Diene elastomer

"Diene" elastomer or rubber should be understood here, in a known manner, as meaning an elastomer resulting at least in part (i.e., a homopolymer or a copolymer) from diene monomers (monomers carrying two carbon-carbon double bonds which may or may not be conjugated).

Diene elastomers can be classified in a known way into two categories: those "essentially unsaturated" and those "essentially saturated". Butyl rubbers, such as, for example copolymers of dienes and $\alpha$-olefins of EPDM type, come within the category of essentially saturated diene elastomers, having a content of units of diene origin which is low or very low, always less than 15% (mol%). In contrast, essentially unsaturated diene elastomer is understood to mean a diene elastomer resulting at least in part from conjugated diene monomers, having a content of units of diene origin (conjugated dienes) which is greater than 15% (mol%). In the category of "essentially unsaturated" diene elastomers, "highly unsaturated" diene elastomer is understood to mean in particular a diene elastomer having a content of units of diene origin (conjugated dienes) which is greater than 50%.

It is preferable to use at least one diene elastomer of the highly unsaturated type, in particular a diene elastomer chosen from the group consisting of polybutadienes (BR), synthetic polyisoprenes (IR), natural rubber (NR), butadiene copolymers, isoprene copolymers and mixtures thereof. Such copolymers are more preferably chosen from the group consisting of butadiene/styrene copolymers (SBR), isoprene/butadiene copolymers (BIR), isoprene/styrene copolymers (SIR), isoprene/butadiene/styrene copolymers (SBIR) and mixtures thereof.

The elastomers can, for example, be block, random, sequential or microsequential elastomers and can be prepared in dispersion or in solution; they can be coupled and/or star-branched or also functionalized with a coupling and/or star-branching or functionalization agent. For coupling with carbon black, mention may be made, for example, of functional groups comprising a C-Sn bond or of aminated functional groups, such as benzophenone, for example; for coupling with a reinforcing inorganic filler, such as silica, mention may be made, for example, of silanol functional groups or polysiloxane functional groups having a silanol end (such as described, for example, in US 6013 718), of alkoxysilane groups (such as described, for example, in US 5 977 238), of carboxyl groups (such as described, for example, in US 6 815 473 or US 2006/0089445) or of polyether groups (such as described, for example, in US 6 503 973). Mention may also be made, as other examples of such functionalized elastomers, of elastomers (such as SBR, BR, NR or IR) of the epoxidized type.

The following are preferably suitable: polybutadienes, in particular those having a content of 1,2-units of between 4% and 80% or those having a content of cis-1,4-units of greater than 80%, polyisoprenes, butadiene/styrene copolymers in particular those having a styrene content of between 5% and 50% by weight and more particularly between 20% and 40%, a content of 1,2-bonds of the butadiene part of between 4% and 65% and a content of trans-1,4-bonds of between 20% and 80%, butadiene/isoprene copolymers, in particular those having an isoprene content of between 5% and 90% by weight and a glass transition temperature ("Tg" - measured according to ASTM D 3418-82) of -40°C to -80°C, or isoprene/styrene copolymers, in particular those having a styrene content of between 5% and 50% by weight and a Tg of between -25°C and -50°C.

In the case of butadiene/styrene/isoprene copolymers, those having a styrene content of between 5% and 50% by weight and more particularly of between 10% and 40%, an isoprene content of between 15% and 60% by weight and more particularly between 20% and 50%, a butadiene content of between 5% and 50% by weight and more particularly of between 20% and 40%, a content of 1,2-units of the butadiene part of between 4% and 85%, a content of trans-1,4-units of the butadiene part of between 6% and 80%, a content of 1,2- plus 3,4-units of the isoprene part of between 5% and 70% and a content of trans-1,4-units of the isoprene part of between 10% and 50%, and more generally any butadiene/styrene/isoprene copolymer having a Tg of between -20°C and -70°C, are suitable in particular.

According to a particularly preferred embodiment of the invention, the diene elastomer is chosen from the group consisting of natural rubber, synthetic polyisoprenes, polybutadienes having a content of cis-1,4 bonds of greater than 90%, butadiene/styrene copolymers and the mixtures thereof.

According to a more particular and preferred embodiment, the diene elastomer used is predominantly, that is to say for at least 50 phr (The abbreviation "phr" means parts by weight per 100 parts of elastomer), natural rubber (NR)

or a synthetic polyisoprene (IR). More preferably, the said natural rubber or synthetic polyisoprene is then used as a blend with a polybutadiene (BR) having a content of cis-1,4 bonds which is preferably greater than 90%.

According to another particular and preferred embodiment, the diene elastomer used is predominantly, that is to say for at least 50 phr, a polybutadiene (BR) having a content of cis-1,4 bonds of greater than 90%. More preferably, said polybutadiene is then used as a blend with natural rubber or a synthetic polyisoprene.

According to another particular and preferred embodiment, the diene elastomer used is a binary blend (mixture) of NR (or IR) and of BR, or a ternary blend of NR (or IR), BR and SBR. Preferably in the case of such blends, the composition comprises between 25 and 75 phr of NR (or IR) and between 75 and 25 phr of BR, with which may or may not be associated a third elastomer (ternary blend) at a content of less than 30 phr, in particular of less than 20 phr. This third elastomer is preferably an SBR elastomer, in particular a solution SBR ("SSBR"). More preferably still, in the case of such a blend, the composition comprises from 35 to 65 phr of NR (or IR) and from 65 to 35 phr of BR. The BR used is preferably a BR having a content of cis-1,4 bonds of greater than 90%, more preferably of greater than 95%.

Synthetic elastomers other than diene elastomers, indeed even polymers other than elastomers, for example thermoplastic polymers, might be combined, in a minor amount, with the diene elastomers of the compositions of the invention.

5-2. Plasticizing system

The rubber composition composing the surfacic portion (3) of the tread (2) of the tire (1) of the invention has as other essential characteristic that of comprising more than 30 phr of a plasticizing agent which is liquid (at 20°C), the role of which is to soften the matrix by diluting the elastomer and the reinforcing filler; its Tg is by definition less than -20°C, preferably less than -40°C.

Any extending oil, whether of aromatic or non-aromatic nature, any liquid plasticizing agent known for its plasticizing properties with regard to diene elastomers, can be used. At ambient temperature (20°C), these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

Liquid plasticizers chosen from the group consisting of polyolefinic oils, naphthenic oils (low or high viscosity, in particular hydrogenated or otherwise), paraffinic oils, DAE (Distillate Aromatic Extracts) oils, MES (Medium Extracted Solvates) oils, TDAE oils (Treated Distillate Aromatic Extracts), RAE oils (Residual Aromatic Extracts), TRAE oils (Treated Residual Aromatic Extracts), SRAE oils (Safety Residual Aromatic Extracts), mineral oils, vegetable oils, ether plasticizers, ester plasticizers, phosphate plasticizers, sulphonate plasticizers and the mixtures thereof are particularly suitable.

Mention may be made, as phosphate plasticizers for example, of those that contain between 12 and 30 carbon atoms, for example trioctyl phosphate. As examples of ester plasticizers, mention may especially be made of the compounds chosen from the group consisting of trimellitates, pyromellitates, phthalates, 1,2-cyclohexane dicarboxylates, adipates, azelates, sebacates, triesters of glycerol, and mixtures thereof. Among the above triesters, mention may be made of glycerol triesters, preferably composed predominantly (for more than 50% by weight, more preferably for more than 80% by weight) of an unsaturated $C_{18}$ fatty acid, that is to say an unsaturated fatty acid chosen from the group consisting of oleic acid, linoleic acid, linolenic acid and the mixtures thereof. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known; for example they have been described in Application WO 02/088238, as plasticizing agents in treads for tires.

The content of liquid plasticizer in the composition of the invention is preferably greater than 40 phr, more preferably included within a range from 50 to 100 phr.

According to another preferred embodiment, the compositions of the invention can also comprise, as plasticizer which is solid (at 20°C), a hydrocarbon resin exhibiting a Tg of greater than +20°C, preferably greater than +30°C, such as is described, for example in Applications WO 2005/087859, WO 2006/061064 and WO 2007/017060.

Hydrocarbon resins are polymers well known to a person skilled in the art which are essentially based on carbon and hydrogen and thus miscible by nature in diene elastomer composition(s), when they are additionally described as being "plasticizing". They have been described, for example, in the work entitled "Hydrocarbon Resins" by R. Mildenberg, M. Zander and G. Collin (New York, VCH, 1997, ISBN 3-527-28617-9), chapter 5 of which is devoted to their applications, in particular in the tire rubber field (5.5. *"Rubber Tires and Mechanical Goods*"). They can be aliphatic or aromatic or also of the aliphatic/aromatic type, that is to say based on aliphatic and/or aromatic monomers. They can be natural or synthetic and may or may not be oil-based (if such is the case, also known under the name of petroleum resins). They are preferably exclusively hydrocarbon, that is to say that they comprise only carbon and hydrogen atoms.

Preferably, the plasticizing hydrocarbon resin exhibits at least one, more preferably all, of the following characteristics:

- a Tg of greater than 20°C (more preferably between 40 and 100°C);
- a number-average molecular weight (Mn) of between 400 and 2000 g/mol (more preferably between 500 and 1500g/mol);
- a polydispersity index (PI) of less than 3, more preferably less than 2 (reminder: PI = Mw/Mn with Mw the weight-average molecular weight).

The Tg is measured in a known way by DSC (*Differential Scanning Calorimetry*) according to Standard ASTM D3418 (1999). The macrostructure (Mw, Mn and PI) of the hydrocarbon resin is determined by steric exclusion chromatography (SEC): solvent tetrahydrofuran; temperature 35°C; concentration 1 g/1; flow rate 1 ml/min; solution filtered through a filter with a porosity of 0.45 μm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a particularly preferred embodiment, the plasticizing hydrocarbon resin is chosen from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins and the mixtures thereof. Use is more preferably made, among the above copolymer resins, of those chosen from the group consisting of (D)CPD/ vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinylaromatic copolymer resins, $C_9$ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The content of hydrocarbon resin is preferably between 3 and 60 phr, more preferably between 3 and 40 phr, in particular between 5 and 30 phr.

The content of total plasticizing agent (i.e., liquid plasticizer plus, if appropriate, solid hydrocarbon resin) is preferably between 40 and 100 phr, more preferably included within a range of from 50 to 80 phr.

### 5-3. Reinforcing filler

Use may be made of any type of reinforcing filler known for its capabilities of reinforcing a rubber composition which can be used for the manufacture of tires, for example an organic reinforcing filler, such as carbon black, or a reinforcing inorganic filler, such as silica, with which a coupling agent is combined in a known way.

Such a reinforcing filler typically consists of nanoparticles, the mean size (by weight) (see, for example, ISO-13320 (Particle size analysis-Laser diffraction methods), of which is less than 500 nm, generally between 20 and 200 nm, in particular and preferably between 20 and 150 nm.

All carbon blacks, in particular blacks of the HAF, ISAF or SAF type, conventionally used in treads for tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks. The carbon blacks might, for example, be already incorporated in the isoprene elastomer in the form of a masterbatch (see, for example, Applications WO 97/36724 or WO 99/16600).

Mention may be made, as examples of organic fillers other than carbon blacks, of the functionalized polyvinyl organic fillers as described in Applications WO 2006/069792, WO 2006/069793, WO2008/003434 and WO2008/003435.

The term "reinforcing inorganic filler" should be understood here as meaning any inorganic or mineral filler, whatever its colour and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica ($SiO_2$), or of the aluminous type, in particular alumina ($Al_2O_3$), are suitable in particular as reinforcing inorganic fillers. The silica used can be any reinforcing silica known to a person skilled in the art, in particular any precipitated or pyrogenic silica exhibiting a BET surface and a CTAB specific

surface both of less than 450 $m^2/g$, preferably from 30 to 400 $m^2/g$, in particular between 60 and 300 $m^2/g$. Mention will be made, as highly dispersible ("HD precipitated silicas"), for example, of the Ultrasil 7000 and Ultrasil 7005 silicas from Evonik, the Zeosil 1165MP, 1135MP and 1115MP silicas from Rhodia, the "Hi-Sil" EZ150G silica from PPG, the "Zeopol" 8715, 8745 and 8755 silicas from Huber. Mention may be made, as examples of reinforcing aluminas, of the "Baikalox A125" or "Baikalox CR125" aluminas from Baïkowski, the "APA-100RDX" alumina from Condea, the "Aluminoxid C" alumina from Degussa or the "AKP-G015" alumina from Sumitomo Chemicals.

Preferably, the content of total reinforcing filler (carbon black and/or reinforcing inorganic filler) is between 60 and 120 phr, in particular between 70 and 100 phr.

According to a specific embodiment, the reinforcing filler comprises predominantly carbon black; in such a case, the carbon black is present at a content preferably of greater than 60 phr, in combination or not with a reinforcing inorganic filler, such as silica, in a minor amount.

According to another specific embodiment, the reinforcing filler comprises predominantly an inorganic filler, in particular silica; in such a case, the inorganic filler, in particular silica, is present at a content preferably of greater than 70 phr, in combination or not with carbon black in a minor amount; the carbon black, when it is present, is preferably used at a content of less than 20 phr, more preferably less than 10 phr (for example between 0.1 and 10 phr).

Independently of the first aspect of the invention, namely the search for optimized grip on snow and ice, the predominant use of a reinforcing inorganic filler, such as silica, is also advantageous from the viewpoint of the grip on a wet ground surface.

According to another possible embodiment of the invention, the reinforcing filler comprises a blend of carbon black and of reinforcing inorganic filler such as silica, in similar amounts; in such a case, the content of inorganic filler, in particular silica, and the content of carbon black are preferably each between 25 and 75 phr, more particularly each between 30 and 50 phr.

In order to couple the reinforcing inorganic filler to the diene elastomer, use is made, in a well-known way, of an at least bifunctional coupling agent (or bonding agent) intended to provide a satisfactory connection, of chemical and/or physical nature, between the inorganic filler (surface of its particles) and the diene elastomer. Use is made, in particular, of bifunctional organosilanes or polyorganosiloxanes.

Use is made in particular of silane polysulphides, referred to as "symmetrical" or "asymmetrical" depending on their specific structure, as described, for example, in Applications WO 03/002648 (or US 2005/016651) and WO 03/002649 (or US 2005/016650).

"Symmetrical" silane polysulphides corresponding to the following general formula (I):

(I) $$Z - A - S_x - A - Z ,$$

in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

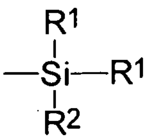 ; 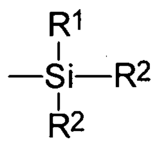 ; 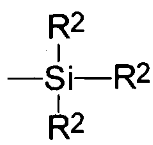 ,

in which:

- the $R^1$ radicals, which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl),
- the $R^2$ radicals, which are unsubstituted or substituted and identical to or different from one another, represent a $C_1$-$C_{18}$ alkoxyl or $C_5$-$C_{18}$ cycloalkoxyl group (preferably a group chosen from $C_1$-$C_8$ alkoxyls and $C_5$-$C_8$ cycloalkoxyls, more preferably still a group chosen from $C_1$-$C_4$ alkoxyls, in particular methoxyl and ethoxyl),

are suitable in particular, without the above definition being limiting.

Mention will more particularly be made, as examples of silane polysulphides, of bis(($C_1$-$C_4$)alkoxyl($C_1$-$C_4$)alkyls-

ilyl($C_1$-$C_4$)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula $[(C_2H_5O)_3Si(CH_2)_3S_2]_2$, or bis(triethoxysilylpropyl)disulphide, abbreviated to TESPD, of formula $[(C_2H_sO)_3Si(CH_2)_3S]_2$. Mention will also be made, as preferred examples, of bis(mono($C_1$-$C_4$)alkoxyldi($C_1$-$C_4$)alkylsilylpropyl) polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815 or WO 2007/098080.

Of course, use could also be made of mixtures of the coupling agents described previously, as described in particular in the aforementioned application WO 2006/125534.

In the rubber compositions in accordance with the invention, the content of coupling agent is preferably between 2 and 15 phr, more preferably between 3 and 12 phr.

A person skilled in the art will understand that a reinforcing filler of another nature, in particular organic nature, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer.

The rubber composition composing the internal portion (4) of the tread (2) of the tire (1) of the invention also comprises the diene elastomer, the plasticizing agent and the reinforcing filler such as those present in the surfacic portion (3).

5-4. Hydro soluble milliparticles

The rubber composition composing the surfacic portion (3) of the tread (2) of the tire (1) of the invention has the essential characteristic of comprising hydro soluble (that is, by definition, which can dissolve in water) milliparticles (5) having a median size (distribution by weight) of more than 1 mm in a volume fraction of the hydro soluble milliparticles of more than 20% in volume of the rubber composition of the surfacic portion (3).

Hydrosolubility or solubility in water (it should be remembered that maximum weight of dissolved substance in water at given one temperature and one pressure) is one of basically well-known and constant physics (in particular, available in the "Handbooks of Chemistry and Physic") of the compounds which are organic or inorganic.

The person skilled art in the art understands that the hydro soluble milliparticles can dissolve at least partly in water. Preferably, the solubility of the hydro soluble milliparticles in water at 0 °C under a pressure equal to 1 atm is higher than 1 g/100ml, more preferably higher than 2 g/100ml, still more preferably higher than 4 g/100ml.

By "milliparticles" or "millimetric particles" (both terms being synonymous) is understood to mean, by definition, particles of millimetric size, that is to say for which the median size (expressed by weight) is between 1 mm and 1cm.

Similarly, "millicavities" or "millimetric cavities" mean cavities of millimetric size, and "milliroughness" or "millimetric roughness" means roughness of millimetric size.

Preferably, these hydro soluble milliparticles have a median size by weight of between 1 mm and 5 mm. Below the minimum indicated above, the targeted technical effect (namely the creation of a suitable milliroughness) is inadequate and so that the hydro soluble milliparticles have a median size by weight of more preferably 1.2 mm or more, still more preferably 1.5 mm or more.

Whereas, above the maximum indicated, various disadvantages emerge, in particular when the rubber composition is used as tread: apart from a possible aesthetic loss and a risk of cohesion loss during rolling of relatively large elements of the tread pattern, it being found that the grip performance on snow and/or ice may be damaged.

For all these reasons, it is preferable for the hydro soluble milliparticles to have a median size of between 1 mm and 4 mm, more preferably between 1 mm and 3 mm. This particularly preferred size range appears to correspond to an optimized compromise between, on the one hand, a desired surface roughness and, on the other hand, good contact between the rubber composition and snow/ice.

Moreover, for identical reasons to those set out above, the volume fraction is preferably more than 30% (notably between 30% and 70%), more preferably more than 40% (notably between 40% and 65%), still more preferably between 40% and 60% in volume of the rubber composition of the surfacic portion (3).

The volume fraction as used in the field of this invention is the ratio of the volume of the hydro soluble milliparticles to the volume of the rubber composition (total volume, including the hydro soluble milliparticles) composing the surfacic portion (3) of the tread (2) of the invention.

The equation formula for the ratio can be described as follow.

$$V_f = V_P / V_{PR}$$

Wherein:

$V_f$: Volume fraction of the hydro soluble milliparticles in volume of the rubber composition of the surfacic portion (3)
Vp: Volume of the hydro soluble milliparticles in the rubber composition of the surfacic portion (3)
$V_{PR}$: Volume of the rubber composition (total volume, including the hydro soluble milliparticles) of the surfacic portion (3)

In addition, the equation formula can be also mentioned below..

$$V_f=(Q_P/D_P)/ (Q_P/D_P+Q_R/D_R)$$

Wherein:

Qp: Content of the hydro soluble milliparticles composing the rubber composition of the surfacic portion (3) (phr)
$Q_R$: Content of the rubber composition of the surfacic portion (3) excluding the hydro soluble milliparticles (phr)
Dp: Specific gravity (density) of the hydro soluble milliparticles composing and extracted from the rubber composition of the surfacic portion (3) ($g/cm^3$)
$D_R$: Specific gravity (density) of the rubber composition of the surfacic portion (3) excluding the hydro soluble milliparticles ($g/cm^3$)

Various known methods are applicable for the analysis of the above specific gravity (density). For example, immersion method, liquid pycnometer method and titration method (see, for example Standard ISO1183, ASTM D792).

The invention applies to all types of hydro soluble milliparticles, whether the hydro soluble milliparticles are solid, for instance porous or not, or hollow or not, for instance in the form of a powder or in any other form (for instance, spherical, cubic, pyramidal, conic, parallelepiped, ovoid or even random).

According to another preferred embodiment, the hydro soluble milliparticles comprise a metal salt, a hydro soluble polymer or a mixture of such materials.

According to a still more preferred embodiment, the salt of the metal salt is chosen from the group consisting of chloride, carbonate, sulphate and the mixture thereof, and the metal of the metal salt is an alkali metal or an alkaline earth metal. More preferably still, the alkali metal or the alkaline earth metal is chosen from the group consisting of Na, K, Ca, Mg and the mixture thereof.

According to a more preferred embodiment, the hydro soluble polymer is chosen from the group consisting of polyvinyl alcohol polymer, modified cellulose polymer and mixtures thereof.

Various known methods are applicable for the analysis of the distribution of the particle size and the calculation of the median size of the hydro soluble milliparticles (or median diameter for hydro soluble milliparticles assumed to be substantially spherical), for example by laser diffraction (see, for example Standard ISO 8130 13 or Standard JIS K5600-9-3).

Use may also simply and preferably be made of an analysis of the hydro soluble milliparticles size distribution by mechanical sieving; the operation consists of sieving a defined amount of sample (for example 200 g) on a vibrating table for 30 min with different sieve diameters (for example, according to a progressive ratio equal to 1.26, with meshes for instance from about 6 mm to about 50 $\mu$m depending on the size of the specific particles to be analyzed); the oversize collected in each sieve is weighed on a precision balance; the % of oversize for each mesh diameter with respect to the total weight of product is deduced therefrom; the median size (or median diameter) or mean size (or mean diameter) is finally calculated in a known way from the histogram of the particle size distribution.

The rubber composition composing the internal portion (4) of the tread (2) of the tire (1) of the invention is made of the rubber composition which is different from the rubber composition of the surfacic portion (3).

According to a preferred embodiment, the rubber composition composing the internal portion (4) is devoid of hydro soluble milliparticles or contains hydro soluble milliparticles (6), and a volume fraction of the hydro soluble milliparticles (6) in volume of the rubber composition of the internal portion (4) is lower than the volume fraction of hydro soluble milliparticles (5) in volume of the rubber composition of the surfacic portion (3), preferably is totally devoid of the hydro soluble milliparticles (6).

The volume fraction of the hydro soluble milliparticles (6) in volume the rubber composition of the internal portion (4) is the ratio of the volume of the hydro soluble milliparticles to the volume of the rubber composition (total volume, including the hydro soluble milliparticles) composing the internal portion (4) of the tread (2) of the invention such as those present in the surfacic portion (3).

5-5. Various additives

The rubber compositions may also comprise all or a portion of the usual additives generally used in the elastomer compositions intended for the manufacture of treads for tires, in particular for winter tires, such as, for example, protection agents, such as antiozone waxes, chemical antiozonants, antioxidants, reinforcing resins, methylene acceptors (for example phenolic novolac resin) or methylene donors (for example HMT or H3M), a crosslinking system based either on sulphur or on donors of sulphur and/or peroxide and/or bismaleimides, vulcanization accelerators, or vulcanization activators.

These compositions can also comprise coupling activators when a coupling agent is used, agents for covering the inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

FIG. 1. shows a schematic view of a tire cross sectional view of a pneumatic tire tread (2) of dimension 205/55R16, such tread (2) being provided with two portions, firstly a surfacic portion (3) composing part of a contact face intended to come into contact with ground during rolling at least when such tread (2) is new, and secondly an internal portion (4) made of a rubber composition with a formulation different from the formulation of the rubber composition composing the surfacic portion (3), and adjacent to the surfacic portion (3). The internal construction of this pneumatic tire (1) other than the tread (2), is the same structure as conventional pneumatic radial tire, thus description of the internal construction will be omitted.

The thickness (measured in the radial direction of the tire) of the surfacic portion (3) is more than 1 mm. Below the minimum indicated above, it may be difficult to contain and/or hold the milliparticles in the surfacic portion (3) at new state of the tread of the pneumatic tire. This thickness is preferably between 1 mm and 5 mm, more preferably between 1 mm and 4 mm, and still more preferably between 1 mm and 3 mm in order to effectively improve grip on snow and ice especially at new state and/or initial using time of the tread of the pneumatic tire by the milliparticles (5) which have the median size by weight of more than 1 mm (preferably between 1 mm and 4 mm, more preferably between 1 mm and 3 mm) and efficiently appear on a rolling surface intended to come into contact with a ground surface during running of the pneumatic. Most preferably, this thickness is from 1.5 mm to 2 mm.

The surfacic portion (3) comprises the hydro soluble milliparticles (5) having the volume fraction more than 20% in volume of the rubber composition of the surfacic portion (3), the hydro soluble milliparticles (5) are partly exposed without being totally or partly covered by a rubber skin, which results creating roughness on the tire rolling surface in the new state. Then after such surfacic portion (3) wears out and the internal portion (4) starts touching with ground during rolling which already has roughness on its contact face.

Preferably, the thickness (measured in the radial direction of the tire) of the internal portion (4) adjacent to the surfacic portion (3) is more than 1 mm, more preferably more than 2 mm, still more preferably more than 3 mm, notably between 6 mm and 9 mm. Most preferably, this thickness is from 8 mm to 8.5 mm.

More preferably, the rubber composition composing the internal portion (4) of the tread (2) is totally devoid of hydro soluble milliparticles or contains hydro soluble milliparticles in a volume fraction of less than 10%, still more preferably less than 5%, particularly less than 2% in volume of the rubber composition of the internal portion (4), more particularly is totally devoid of such hydro soluble milliparticles in order to avoid a risk of cohesion loss during rolling of relatively large elements of the tread pattern because the internal portion (4) starts touching with ground during rolling which has roughness on its contact face after the surfacic portion (3) wears out. Such hydro soluble milliparticles (5, 6) can be of the same kind for both the surfacic portion (3) and (if present) the internal portion (4), or can be different kinds between the surfacic portion (3) and (if present) the internal portion (4). The surfacic portion (3) and/or the internal portion (4) can be made of a non-foamed rubber composition.

According to another preferred embodiment, the rubber composition composing the internal portion (4) is a foamed rubber composition devoid or having predetermined content of hydro soluble milliparticles and/or hydro soluble microparticles in order to maintain improvement of friction coefficient on snow and ice provided by the surfacic portion (3) after wearing the surfacic portion (3). Preferably, the internal portion (4) is made of the foamed rubber composition which is totally devoid of such hydro soluble milliparticles.

The surfacic portion (3) can be made, either all over the tread (2) including a part not contacting with ground, or only on the part of the tread (2) contacting with ground during rolling, as shown in figure 2.

FIG. 2. shows a variant of this invention. In this figure 2 also, the tread (2) being provided with two portions, the surfacic portion (3) composing part of the contact face intended to come into contact with ground during rolling at least when such tread (2) is new, and the internal portion (4) made of a rubber composition different with the rubber composition composing the surfacic portion (3) and adjacent to the surfacic portion (3). The surfacic portion (3) in this figure is formed only on the part of the tread (2) which contacts really with ground.

The advantage of this configuration is to be able to precisely placing the surfacic portion (3) where such surfacic portion (3) is really useful, thus efficiency to have such surfacic portion (3) for improving grip on snow and ice at new state is increased.

According to a preferred embodiment, the rubber composition composing the internal portion (4) is devoid or contains less than 2% (in volume of the rubber composition of the internal portion (4)) of hydro soluble milliparticles (6) such as that in the surfacic portion (3), preferably is totally devoid of the hydro soluble milliparticles (6).

According to another preferred embodiment, the rubber composition composing the internal portion (4) is a foamed rubber composition. The internal portion (4) is made of the foamed rubber composition which is devoid or contains less than 2% (in volume of the rubber composition of the internal portion (4)) of the hydro soluble milliparticles (6) such as that in the surfacic portion (3)), preferably is totally devoid of the hydro soluble milliparticles (6). Such hydro soluble milliparticles (5, 6) can be of the same kind for both the surfacic portion (3) and (if present) the internal portion (4), or can be different kinds between the surfacic portion (3) and (if present) the internal portion (4). The surfacic portion (3) arid/or the internal portion (4) can be made of a non-foamed rubber composition.

5-6. Manufacture of the rubber compositions and of the treads

The rubber compositions composing the surfacic and the internal portions (3, 4) of the tread (2) of the invention are manufactured in appropriate mixers using two successive preparation phases according to a general procedure well known to a person skilled in the art: a first phase of thermomechanical working or kneading (sometimes described as "non-productive" phase) at high temperature, up to a maximum temperature of between 130°C and 200°C, preferably between 145°C and 185°C, followed by a second phase of mechanical working (sometimes described as "productive" phase) at a lower temperature, typically of less than 120°C, for example between 60°C and 100°C, finishing phase during which the crosslinking or vulcanization system is incorporated.

A process which can be used for the manufacture of such compositions forming the surfacic portion (3) of the treads (2) according to the invention comprises, for example and preferably, the following steps:

- incorporating in the diene elastomer, in a mixer, more than 30 phr of a liquid plasticizer, within a range from 50 to 150 phr of a reinforcing filler, hydro soluble milliparticles having a median size by weight of more than 1 mm and the hydro soluble milliparticles having predetermined content making a volume fraction of the hydro soluble milliparticles more than 20% in volume of the rubber composition of the surfacic portion (3), everything being kneaded thermomechanically, in one or more goes, until a maximum temperature of between 130°C and 200°C is reached;
- cooling the combined mixture to a temperature of less than 100°C;
- subsequently incorporating a crosslinking system;
- kneading everything up to a maximum temperature of less than 120°C;
- extruding or calendering the rubber composition thus obtained, in particular in the form of a surfacic portion (3) of a tire tread (2).

By way of example, the first (non-productive) phase is carried out in a single thermomechanical stage during which all the necessary constituents, the optional additional covering agents or processing aids, and various other additives, with the exception of the crosslinking system, are introduced into an appropriate mixer, such as a normal internal mixer. After cooling the mixture thus obtained during the first non-productive phase, the crosslinking system is then incorporated at low temperature, generally in an external mixer, such as an open mill; everything is then mixed (productive phase) for a few minutes, for example between 5 and 15 min.

The crosslinking system proper is preferably based on sulphur and on a primary vulcanization accelerator, in particular on an accelerator of sulphenamide type. Added to this vulcanization system are various known secondary accelerators or vulcanization activators, such as zinc oxide, stearic acid, and guanidine derivatives (in particular diphenylguanidine), incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably

chosen from the group consisting of 2-mercaptobenzothiazyl disulphide (abbreviated to "MBTS"), N-cyclohexyl-2-benzothiazolesulphenamide (abbreviated to "CBS"), N,N-dicyclohexyl-2-benzothiazolesulphenamide ("DCBS"), N-tert-butyl-2-benzothiazolesulphenamide ("TBBS"), N-tert-butyl-2- benzothiazolesulphenimide ("TBSI"), zinc dibenzyldithiocarbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as a part of a winter tire tread.

As for making a pneumatic tire (1) according to the invention, one can also build a first layer of a homogeneous rubber composition having a concentration in hydro soluble milliparticles having a median size by weight of more than 1 mm and a volume fraction of the hydro soluble milliparticles more than 20% (in volume of the rubber composition) and a second layer devoid of hydro soluble milliparticles or having a lower concentration than the first layer, then superpose the first layer onto the second layer to get a raw tread band, and then build and mold a tire. The first layer forming the surfacic portion (3) is located so as to contact the road in the new state of the tire.

The vulcanization (or curing) is carried out in a known way at a temperature generally of between 130°C and 200°C for a sufficient time which can vary, for example, between 5 and 90 min depending in particular on the curing temperature, the vulcanization system adopted and the vulcanization kinetics of the composition under consideration.

The invention relates to the tires described above, both in the raw state (i.e., before curing) and in the cured state (i.e., after crosslinking or vulcanization).

## 6. EXAMPLES OF THE IMPLEMENTATION OF THE INVENTION

### 6-1. Preparation of the rubber compositions comprising the surfacic portion and of the treads

In the following tests, three compositions (identified as C-1, C-2 and C-3) based on diene elastomers (NR and BR blend), are compared, which compositions are reinforced with a blend of silica and carbon black with which is combined a fraction of hydro soluble milliparticles comprising sodium chloride, or is combined a fraction of hydro soluble microparticles comprising sodium chloride, or is not combined either as follows:

- composition C-1: control composition (without milliparticles/microparticles);
- composition C-2: composition in accordance with the invention, with 500 phr of sodium chloride milliparticles (median size of around 1.5 mm);
- composition C-3: composition with 500 phr of sodium chloride microparticles (median size of around 200 μm).

All the median sizes (weight distribution) indicated above are measured by mechanical sieving as indicated in paragraph 5-4 above. Only the composition C-2 comprising milliparticles is therefore in accordance with the invention.

The formulations of the three compositions (Table 1 - contents of the various products expressed in phr) are given in Table 1; the vulcanization system is composed of sulphur and sulphenamide. The reinforcing filler (in this example silica as reinforcing inorganic filler, its associated coupling agent, and small amount of carbon black), the plasticizer, each of milliparticles or microparticles, the diene elastomer (or blend of diene elastomers) and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasted in total approximately 3 to 4 minutes, until a maximum "dropping" temperature of 165°C wasreached. The mixture thus obtained was recovered and cooled and then sulphur and an accelerator of sulphenamide type were incorporated on an external mixer (homofinisher) at 30°C, everything being mixed (productive phase) for an appropriate time (for example between 5 and 12 min). Each compositions thus obtained were subsequently calendered, either in the form of plaques (thickness of 2 to 3 mm) or of fine sheets of rubber for the following tests.

Each specific gravity (density) of the hydro soluble milliparticles or the hydro soluble microparticles composing and extracted from C-2 and C-3 and the corresponding compositions excluding the hydro soluble milliparticles or the hydro soluble microparticles, is measured by immersion method as indicated in the paragraph 5-4 above. Each volume fraction is calculated from each specific gravity (density) as indicated in the paragraph 5-4 above (the hydro soluble microparticles instead of hydro soluble milliparticles in case of the composition C-3). Each specific gravity (density) and volume fractions of the compositions are given in Table 2.

### 6-2. Friction test (snow test) on rubber block

These three compositions were subjected to a laboratory test consisting in measuring their friction coefficient on snow. The principle is based on a block of rubber composition that slides at a given speed (for example equal to 5

km/h) over a snow track with an imposed load (for example equal to 3 $kg/cm^2$). The forces generated in the direction of travel (Fx) of the block and perpendicular to the travel (Fz) are measured. The Fx/Fz ratio determines the friction coefficient of the test specimen on the snow. The snow temperature was set at -10°C, and the snow test was conducted on a hard pack snow track with a CTI penetrometer reading of around 90 in according to Standard ASTM F1805. The hydro soluble milliparticles or the hydro soluble microparticles had been extracted from the surfaces of blocks by mechanical abrasion treatment which had been reproducing tire rolling condition at beginning of usage. This treatment had been done for the compositions C-2 and C-3 before the friction test on snow in order to expose the millicavities or the microcavities on the surface.

This test, the principle of which is well known to a person skilled in the art (see, for example, patent applications EP 1052 270 and EP 1 505 112) makes it possible to evaluate, under representative conditions, the grip on ice/snow which would be obtained after a running test on a vehicle fitted with tires whose tread is composed of the same rubber compositions.

The results are expressed in Table 3. A value above that of the control (composition C-1), arbitrarily set at 100, indicates an improved result, that is to say an aptitude for shorter braking distance. It is observed in this Table 3 that the composition C-2 in accordance with the invention has a definite increase (6%) in the friction coefficient on the snow, relative to the control composition C-1. The other composition C-3, which is not in accordance with the invention, does not show any improvement of the snow friction coefficient relative to the control composition C-1.

In conclusion, the tread in accordance with the invention comprising hydro soluble milliparticles in its surfacic portion, gives the tires a combined braking and acceleration performances on snow/ice that are significantly improved.

**Table 1**

| Rubber Composition No.: | C-1 | C-2 | C-3 |
|---|---|---|---|
| BR (1) | 60 | 60 | 60 |
| NR (2) | 40 | 40 | 40 |
| Silica (3) | 80 | 80 | 80 |
| Coupling agent (4) | 6.4 | 6.4 | 6.4 |
| Hydro soluble milliparticles (5) | - | 500 | - |
| Hydro soluble microparticles (6) | - | - | 500 |
| Carbon black (7) | 5 | 5 | 5 |
| Non aromatic oil (8) | 50 | 50 | 50 |
| Hydrocarbon resin (9) | 10 | 10 | 10 |
| DPG (10) | 1.9 | 1.9 | 1.9 |
| ZnO | 1.3 | 1.3 | 1.3 |
| Stearic acid | 1 | 1 | 1 |
| Antiozone wax | 1.5 | 1.5 | 1.5 |
| Antioxidant (11) | 2 | 2 | 2 |
| Sulphur | 2 | 2 | 2 |
| Accelerator (12) | 1.7 | 1.7 | 1.7 |

(1) BR with 0.3% of 1,2-; 2.7% of trans; 97% of cis-1,4- (Tg = - 104°C);
(2) Natural rubber (peptised);
(3) Silica "Zeosil 1165MP" from Rhodia
(4) Coupling agent TESPT ("Si69" from Degussa);
(5) Sodium chloride ("Minaminokiwami" from Cheetham Salt), (median size of the particles: around 1.5 mm);
(6) Sodium chloride ("Minaminokiwami" from Cheetham Salt), (median size of the particles: around 200 μm);
(7) Grade ASTM N234 (Cabot);
(8) MES oil ("Catenex SNR" from Shell)
(9) Escorez 2173 Resin (Exxon)
(10) Diphenylguanidine (Perkacit DPG from Flexsys);
(11) N-(1,3-dimethylbutyl)-N-phenyl-para-phenylenediamine (Santoflex 6-PPD from Flexsys);
(12) N-dicyclohexyl-2-benzothiazolesulphenamide ("Santocure CBS" from Flexsys).

**Table 2**

| Rubber composition No.: | C-2 | C-3 |
|---|---|---|
| Specific gravity of hydro soluble milliparticles or hydro soluble microparticles composing each composition ($g/cm^3$) | 2.17 | 2.17 |
| Specific gravity of each composition excluding hydro soluble milliparticles or hydro soluble microparticles ($g/cm^3$) | 1.14 | 1.14 |
| Volume fraction (%) | 49% | 49% |

**Table 3**

| Rubber composition No.: | C-1 | C-2 | C-3 |
|---|---|---|---|
| Friction on snow (-10°C)*1 | 100 | 106 | 96 |
| (1) Sliding speed: 0.5m/s | | | |

7. REFERENCE SIGNS LIST

1. Pneumatic tire
2. Tread of the pneumatic tire
3. Surfacic portion
4. Internal portion
5. Hydro soluble milliparticles in the surfacic portion
6. Hydro soluble milliparticles in the internal portion

**Claims**

**1.** A pneumatic tire (1) having a tread (2) comprising at least two radially superposed portions comprising:

- a surfacic portion (3) intended to come into contact with ground during rolling at least when the tread is new and in the cured state, having a thickness of more than 1 mm and being made of a rubber composition,
- an internal portion (4) adjacent to the surfacic portion (3), having a thickness of more than 1 mm and being made of a rubber composition which is different from the rubber composition of the surfacic portion,

wherein the rubber composition of the surfacic portion comprises at least:

- a diene elastomer;
- more than 30 phr of a liquid plasticizer;
- 50 to 150 phr of a reinforcing filler; and
- hydro soluble milliparticles having a median size by weight of more than 1 mm, in a volume fraction of the hydro soluble milliparticles of more than 20% in volume of the rubber composition of the surfacic portion.

**2.** The tire according to Claim 1, wherein the volume fraction of the hydro soluble milliparticles is more than 30% in volume of the rubber composition of the surfacic portion.

**3.** The tire according to Claim 1 or Claim 2, wherein the hydro soluble milliparticles have the median size by weight of between 1 mm and 5 mm.

**4.** The tire according to any one of Claims 1 to 3, wherein the hydro soluble milliparticles comprise a metal salt, a hydro soluble polymer or a mixture thereof.

**5.** The tire according to any one of Claims 1 to 3, wherein the hydro soluble milliparticles comprise a metal salt in which

said salt is chosen from the group consisting of chloride, carbonate, sulfate and the mixture thereof.

6. The tire according to any one of Claims 1 to 3, wherein the hydro soluble milliparticles comprise a metal salt in which said metal is an alkali metal or an alkaline earth metal.

7. The tire according to Claim 6, wherein the alkali metal or the alkaline earth metal is chosen from the group consisting of Na, K, Ca, Mg and the mixture thereof.

8. The tire according to any one of Claims 1 to 3, wherein the hydro soluble milliparticles comprise a hydro soluble polymer which is chosen from the group consisting of polyvinyl alcohol polymer, modified cellulose polymer and mixtures thereof.

9. The tire according to any one of Claims 1 to 8, wherein the diene elastomer is chosen from the group consisting of natural rubber, synthetic polyisoprenes, polybutadienes, butadiene copolymers, isoprene copolymers and the mixtures thereof.

10. The tire according to Claim 9, wherein the surfacic portion comprises at least 50 phr of natural rubber or of synthetic polyisoprène as the diene elastomer.

11. The tire according to Claim 9 or Claim 10, wherein the surfacic portion comprises at least 50 phr of a polybutadiene having a content of cis-1,4 bonds of greater than 90%.

12. The tire according to any one of Claims 1 to 11, wherein the reinforcing filler comprises an inorganic filler or a carbon black or a mixture thereof.

13. The tire according to any one of Claims 1 to 12, wherein the content of total reinforcing filler is between 60 and 120 phr.

14. The tire according to any one of Claims 1 to 13, wherein the liquid plasticizer is chosen from the group consisting of polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.

15. The tire according to Claim 14, wherein the content of liquid plasticizer is greater than 40 phr.

## Patentansprüche

1. Luftreifen (1), eine Lauffläche (2) aufweisend, die mindestens zwei radial überlagerte Abschnitte umfasst, Folgendes umfassend:

   - einen oberflächlichen Abschnitt (3), der dazu bestimmt ist, während des Rollens mindestens dann mit dem Boden in Kontakt zu kommen, wenn die Lauffläche neu und in einem gehärteten Zustand ist, eine Dicke von mehr als 1 mm aufweisend und aus einer Gummizusammensetzung gefertigt,
   - einen inneren Abschnitt (4) angrenzend an den oberflächlichen Abschnitt (3), eine Dicke von mehr als 1 mm aufweisend und aus einer Gummizusammensetzung gefertigt, die sich von der Gummizusammensetzung des oberflächlichen Abschnitts unterscheidet,

   wobei die Gummizusammensetzung des oberflächlichen Abschnitts mindestens Folgendes umfasst:

   - ein Dien-Elastomer;
   - mehr als 30 phe eines flüssigen Weichmachers;
   - 50 bis 150 phe eines Verstärkerfüllstoffes; und
   - wasserlösliche Millipartikel, die eine mittlere Gewichtsgröße von mehr als 1 mm in einer Volumenfraktion der wasserlöslichen Millipartikel von mehr als 20 Vol.-% der Gummizusammensetzung des oberflächlichen Abschnitts aufweisen.

2. Reifen nach Anspruch 1, wobei die Volumenfraktion der wasserlöslichen Millipartikel mehr als 30 Vol.-% der Gummizusammensetzung des oberflächlichen Abschnitts beträgt.

**3.** Reifen nach Anspruch 1 oder Anspruch 2, wobei die wasserlöslichen Millipartikel eine mittlere Gewichtsgröße von zwischen 1 mm und 5 mm aufweisen.

**4.** Reifen nach einem der Ansprüche 1 bis 3, wobei die wasserlöslichen Millipartikel ein Metallsalz, ein wasserlösliches Polymer oder eine Mischung davon umfassen.

**5.** Reifen nach einem der Ansprüche 1 bis 3, wobei die wasserlöslichen Millipartikel ein Metallsalz umfassen, wobei das Salz aus der Gruppe ausgewählt wird, die aus Chlorid, Carbonat, Sulfat und der Mischung davon besteht.

**6.** Reifen nach einem der Ansprüche 1 bis 3, wobei die wasserlöslichen Millipartikel ein Metallsalz umfassen, wobei das Metall ein Alkalimetall oder ein Erdalkalimetall ist.

**7.** Reifen nach Anspruch 6, wobei das Alkalimetall oder das Erdalkalimetall aus der Gruppe ausgewählt wird, die aus Na, K, Ca, Mg und der Mischung davon besteht.

**8.** Reifen nach einem der Ansprüche 1 bis 3, wobei die wasserlöslichen Millipartikel ein wasserlösliches Polymer umfassen, das aus der Gruppe ausgewählt wird, die aus Polyvinylalkoholpolymer, verändertem Zellulosepolymer und Mischungen davon besteht.

**9.** Reifen nach einem der Ansprüche 1 bis 8, wobei das Dien-Elastomer aus der Gruppe ausgewählt wird, die aus Naturgummi, synthetischen Polyisoprenen, Polybutadienen, Butadien-Copolymeren, Isopren-Copolymeren und den Mischungen davon besteht.

**10.** Reifen nach Anspruch 9, wobei der oberflächliche Abschnitt mindestens 50 phe an Naturgummi oder an synthetischem Polyisopren als Dien-Elastomer umfasst.

**11.** Reifen nach Anspruch 9 oder Anspruch 10, wobei der oberflächliche Abschnitt mindestens 50 phe von einem Polybutadien umfasst, das einen Gehalt an cis-1,4-Bindungen von mehr als 90% aufweist.

**12.** Reifen nach einem der Ansprüche 1 bis 11, wobei der Verstärkerfüllstoff einen anorganischen Füllstoff oder Ruß oder eine Mischung davon umfasst.

**13.** Reifen nach einem der Ansprüche 1 bis 12, wobei der Gehalt eines gesamten Verstärkerfüllstoffs zwischen 60 und 120 phe beträgt.

**14.** Reifen nach einem der Ansprüche 1 bis 13, wobei der flüssige Weichmacher aus der Gruppe ausgewählt wird, die aus Polyolefin-Ölen, Naphten-Ölen, Paraffin-Ölen, Ölen aus aromatischen Destillatextrakten (DAE), Ölen aus milde Extraktionlösungsmittel (MES), Ölen aus aromatischen Extrakten aus behandeltem Destillat (TDAE), Ölen aus aromatischen Restextrakten (RAE), Ölen aus behandeltem aromatischen Restextrakten (TRAE), Sicherheitsöle aus aromatischen Restextrakten (SRAE), Mineralölen, Pflanzenölen, Ether-Weichmachern, Phosphat-Weichmachern, Sulfonat-Weichmachern und den Mischungen davon besteht.

**15.** Reifen nach Anspruch 14, wobei der Gehalt an flüssigem Weichmacher größer als 40 phe ist.

## Revendications

**1.** Pneumatique (1) ayant une bande de roulement (2) comprenant au moins deux portions superposées radialement comprenant :

- une portion surfacique (3) destinée à venir au contact du sol en roulant au moins lorsque la bande de roulement est neuve et dans l’état durci, ayant une épaisseur de plus de 1 mm et étant constituée d’une composition en caoutchouc,
- une portion interne (4) adjacente à la portion surfacique (3), ayant une épaisseur de plus de 1 mm et étant constituée d’une composition en caoutchouc qui est différente de la composition en caoutchouc de la portion surfacique,

dans lequel la composition en caoutchouc de la portion surfacique comprend au moins :

- un élastomère diène ;
- plus de 30 pce d'un plastifiant liquide ;
- de 50 à 150 pce d'une charge de renfort ; et
- des milliparticules hydrosolubles ayant une taille médiane en poids de plus de 1 mm, dans une fraction de volume des milliparticules hydrosolubles de plus de 20 % en volume de la composition en caoutchouc de la portion surfacique.

**2.** Pneumatique selon la revendication 1, dans lequel la fraction de volume des milliparticules hydrosolubles est de plus de 30 % en volume de la composition en caoutchouc de la portion surfacique.

**3.** Pneumatique selon la revendication 1 ou la revendication 2, dans lequel les milliparticules hydrosolubles ont la taille médiane en poids entre 1 mm et 5 mm.

**4.** Pneumatique selon l'une quelconque des revendications 1 à 3, dans lequel les milliparticules hydrosolubles comprennent un sel métallique, un polymère hydrosoluble ou un mélange de ceux-ci.

**5.** Pneumatique selon l'une quelconque des revendications 1 à 3, dans lequel les milliparticules hydrosolubles comprennent un sel métallique dans lequel ledit sel est choisi dans le groupe constitué de chlorure, de carbonate, de sulfate et du mélange de ceux-ci.

**6.** Pneumatique selon l'une quelconque des revendications 1 à 3, dans lequel les milliparticules hydrosolubles comprennent un sel métallique dans lequel ledit sel est un métal alcalin ou un métal alcalinoterreux.

**7.** Pneumatique selon la revendication 6, dans lequel le métal alcalin ou le métal alcalinoterreux est choisi dans le groupe constitué de Na, de K, de Ca, de Mg et du mélange de ceux-ci.

**8.** Pneumatique selon l'une quelconque des revendications 1 à 3, dans lequel les milliparticules hydrosolubles comprennent un polymère hydrosoluble qui est choisi dans le groupe constitué de polymère d'alcool polyvinylique, de polymère de cellulose modifiée et de mélanges de ceux-ci.

**9.** Pneumatique selon l'une quelconque des revendications 1 à 8, dans lequel l'élastomère diène est choisi dans le groupe constitué de caoutchouc naturel, de polyisoprènes synthétiques, de polybutadiènes, de copolymères butadiènes, de copolymères isoprènes et des mélanges de ceux-ci.

**10.** Pneumatique selon la revendication 9, dans lequel la portion surfacique comprend au moins 50 pce de caoutchouc naturel ou de polyisoprène synthétique en tant que l'élastomère diène.

**11.** Pneumatique selon la revendication 9 ou la revendication 10, dans lequel la portion surfacique comprend au moins 50 pce d'un polybutadiène ayant une teneur en liaisons cis-1,4 supérieure à 90 %.

**12.** Pneumatique selon l'une quelconque des revendications 1 à 11, dans lequel la charge de renfort comprend une charge inorganique ou un noir de carbone ou un mélange de ceux-ci.

**13.** Pneumatique selon l'une quelconque des revendications 1 à 12, dans lequel la teneur en charge de renfort totale est entre 60 et 120 pce.

**14.** Pneumatique selon l'une quelconque des revendications 1 à 13, dans lequel le plastifiant liquide est choisi dans le groupe constitué d'huiles polyoléfiniques, d'huiles naphténiques, d'huiles paraffiniques, d'huiles d'extraits aromatiques distillés (DAE), d'huiles de solvat d'extraction modérée(MES), d'huiles d'extraits aromatiques distillés traités(TDAE), d'huiles d'extraits aromatiques résiduels (RAE), d'huiles d'extraits aromatiques résiduels traités (TRAE), d'huiles d'extraits aromatiques résiduels de sécurité (SRAE), d'huiles minérales, d'huiles végétales, de plastifiants d'éther, de plastifiants d'ester, de plastifiants de phosphate, de plastifiants de sulfonate et des mélanges de ceux-ci.

**15.** Pneumatique selon la revendication 14, dans lequel la teneur en plastifiant liquide est supérieure à 40 pce.

FIG.1

(a)

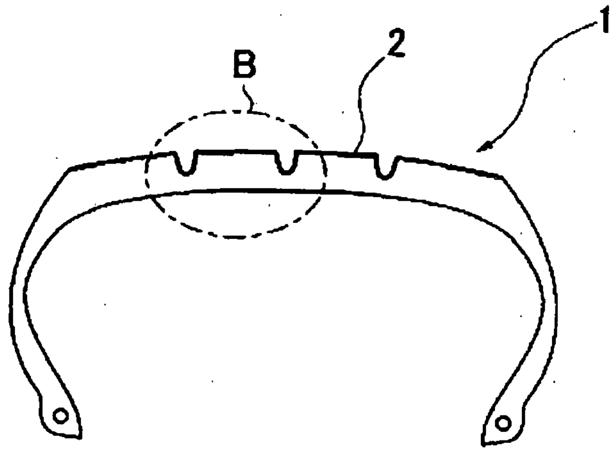


(b)

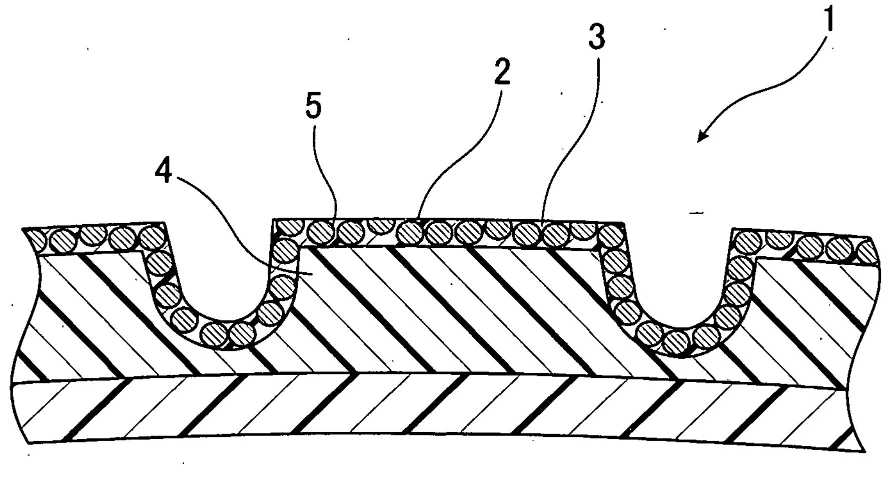

FIG.2

(a)

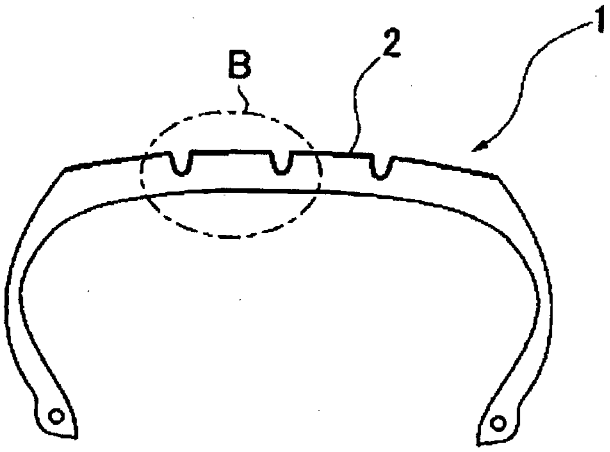


(b)

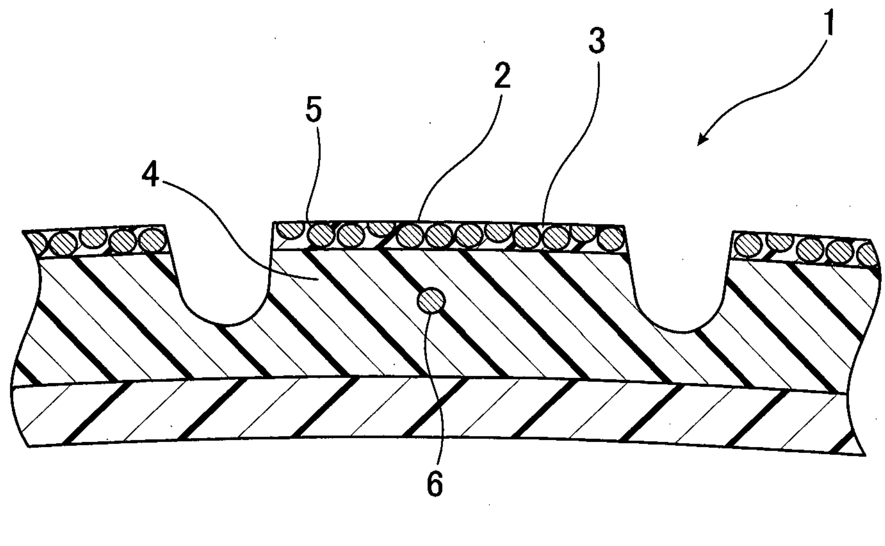

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5287130 A
- WO 2009083125 A
- WO 2010009850 A
- WO 2011073186 A
- WO 2011086061 A
- WO 2012052331 A
- WO 2012085063 A
- US 6013718 A
- US 5977238 A
- US 6815473 B
- US 20060089445 A
- US 6503973 B
- WO 02088238 A
- WO 2005087859 A
- WO 2006061064 A
- WO 2007017060 A
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- EP 1052270 A
- EP 1505112 A

### Non-patent literature cited in the description

- **R. MILDENBERG ; M. ZANDER ; G. COLLIN.** Hydrocarbon Resins. VCH, 1997